Europäisches Patentamt

European Patent Office

Office européen des brevets

(11) Veröffentlichungsnummer: **0 198 458**
**B1**

(12) **EUROPÄISCHE PATENTSCHRIFT**

(45) Veröffentlichungstag der Patentschrift:
14.06.89

(51) Int. Cl.⁴: **A 61 C 5/10, A 61 C 13/08**

(21) Anmeldenummer: **86105074.8**

(22) Anmeldetag: **14.04.86**

(54) Verfahren zum Aufbringen von Retentionskörpern auf Gussmodelle von dentalen, prothetischen Metallkonstruktionen.

(30) Priorität: **19.04.85 DE 3514283**

(43) Veröffentlichungstag der Anmeldung:
**22.10.86 Patentblatt 86/43**

(45) Bekanntmachung des Hinweises auf die Patenterteilung:
**14.06.89 Patentblatt 89/24**

(84) Benannte Vertragsstaaten:
**AT CH DE FR GB LI**

(56) Entgegenhaltungen:
**EP-A- 0 110 193**
**DE-A- 3 243 020**
**DE-B- 1 516 456**
**DE-B- 1 566 259**
**DE-C- 760 351**
**US-A- 2 936 490**

(73) Patentinhaber: **ESPE Stiftung & Co Produktions- und Vertriebs KG, D-8031 Seefeld (DE)**

(72) Erfinder: **Gasser, Oswald, Dr., Hartstrasse 13, D-8031 Seefeld 1 (DE)**

(74) Vertreter: **Abitz, Walter, Dr.-Ing. et al, Abitz, Morf, Gritschneder, Freiherr von Wittgenstein Postfach 86 01 09, D-8000 München 86 (DE)**

ACTORUM AG

## Beschreibung

Die Erfindung betrifft ein Verfahren zum Aufbringen von Retentionskörpern auf Gußmodelle von dentalen, prothetischen Metallkonstruktionen.

In größerem Umfang fehlende Zahnsubstanz wird üblicherweise durch eine Metallkonstruktion in Form einer Krone oder Brücke ersetzt. Aus kosmetischen Gründen wird der im Munde sichtbare Teil der Metallkonstruktion zumindest teilweise durch eine zahnfarbene Masse verblendet; neben keramischen Massen werden hierzu spezielle Kunststoffe verwendet. Um eine gute Verankerung des Kunststoffes auf der Metallkonstruktion zu erzielen, befinden sich auf der Oberfläche der Metallkonstruktion sogenannte Retentionskörper. Üblicherweise sind dies kleine Perlen (Durchmesser z. B. 0,2 bis 8,0 mm); aber auch entsprechend angepaßte Stücke von Waben und Gittern werden verwendet.

Diese Retentionskörper führen zum einen durch die vergrößerte Oberfläche zu verbesserter Adhäsion, gleichzeitig verhindern sie durch ihren sich zur Oberfläche der Metallkonstruktion hin verjüngenden Querschnitt eine Ablösung der Kunststoffverblendung bei Zug-, Scher- oder Druckbeanspruchung.

Die Metallkonstruktionen werden nach dem Prinzip des verlorenen Wachses im Gußverfahren hergestellt. Dazu wird auf einem Gipsmodell des Gebisses die Form der prothetischen Metallkonstruktion aus Wachs modelliert. Dieses sogenannte Gußmodell wird dann in eine feuerfeste Form eingebettet, das Wachs durch Ausschmelzen oder Verbrennen entfernt und das flüssige Metall in bekannter Weise eingeführt.

Die Modellation der Retentionskörper aus Wachs hat sich nicht bewährt, da Unterschnitte nur schwierig zu modellieren sind und dieses Verfahren überdies zeitraubend und umständlich ist.

Es ist z. B. aus der US-A-2 936 490 bekannt, zunächst einen Klebstoff auf die Wachsoberfläche aufzutragen und anschließend rückstandsfrei entfernbare (z. B. durch Verbrennen oder Schmelzen) Kunststoffperlen – oder auch Gitter und Waben aus Wachs oder Kunststoff – auf den Klebstoff aufzubringen. Anschließend kann das Gußmodell wie üblich eingebettet, das Wachs und die Retentionskörper entfernt und das flüssige Metall eingegossen werden.

Bei diesem Verfahren steht relativ wenig Zeit zur Aufbringung der Retentionskörper zur Verfügung, da die Klebstoffe nach kurzer Zeit trocken sind und kein Haftvermögen mehr aufweisen. Eine sorgfältige und ausgewogene Verteilung der Retentionskörper auf der Oberfläche des Gerüstmodells ist daher häufig nicht möglich.

Bei zu dickem Auftrag des Klebers – hervorgerufen oder begünstigt z. B. durch eine eingetrocknete Klebstoffmischung – sinken die Retentionskörper zum Teil bis über ihren maximalen Durchmesser in den Klebstoff ein. Demnach wird nicht das erforderliche Maß der Oberflächenvergrößerung erzielt; noch gravierender ist es jedoch, daß über die Gußoberfläche nur noch wenige oder gar keine Retentionskörperteile hinausragen, deren Querschnitt sich zur Gußmodelloberfläche hin verjüngt. Wie leicht ersichtlich ist, wird durch diese Mängel die Haftung des Verblendkunststoffes auf den Metalloberflächen stark beeinträchtigt.

Hinzu kommt, daß aus kosmetischen Gründen es üblicherweise erforderlich ist, die Metallkonstruktion vor Aufbringung des Kunststoffverblendmaterials mit einem sogenannten Opaker abzudecken, das heißt, die Metallfarbe durch eine opake Schicht mit zahnähnlicher Einfärbung abzudecken. Diese Opakermassen haben häufig eine gegenüber dem Kunststoffverblendmaterial verringerte Festigkeit. Auch nach dem Auftragen des Opakermaterials in deckender Schichtdicke müssen noch Unterschnitte an den Retentionskörpern zur Verfügung stehen, die vom Kunststoffverblendmaterial ausgefüllt werden können. Aus diesem Grunde ist es wünschenswert, daß die Retentionskörper möglichst nur punktuell auf der Metalloberfläche befestigt sind und ein maximaler, sich nach unten verjüngender Teil der Retentionskörper vorhanden ist, der zur Haftung von Opakermassen und Kunststoffverblendmasse zur Verfügung steht.

Aufgabe der Erfindung ist es daher, ein Verfahren zur Verfügung zu stellen, bei dem die Retentionskörper auf Gußmodelle in der Weise aufgebracht werden, daß die sich zur Modelloberfläche hin verjüngenden Teile der Retentionskörper möglichst vollständig über die Modelloberfläche hinausragen.

Diese Aufgabe wird dadurch gelöst, daß man
1.1 einen Haftlack verwendet, der
(a) mindestens eine photopolymerisierbare Verbindung, deren Polymerisation durch Sauerstoff inhibiert wird,
(b) mindestens einen Photopolymerisationsinitiator,
(c) gegebenenfalls mindestens einen Photopolymerisationsaktivator und
(d) gegebenenfalls Füll-, Farb- und Hilfsstoffe, enthält,
1.2 das überzogene Gußmodell mit einer geeigneten Lichtquelle bestrahlt,
1.3 die rückstandsfrei entfernbaren Retentionskörper auf die bestrahlte Gußmodelloberfläche aufbringt und
1.4 das Gußmodell erneut bestrahlt.

Das Gußmodell kann im Verfahrensschritt 1.1 z. B. durch Aufpinseln, Aufsprühen oder Tauchen mit dem Haftlack an den gewünschten Stellen überzogen werden.

Durch die Bestrahlung im Verfahrensschritt 1.2 härtet die photopolymerisierbare Masse aus, wobei jedoch die Oberfläche durch Sauerstoffinhibierung eine klebrige Schicht bildet.

Auf diese Schicht werden nunmehr die gewünschten Retentionskörper aus Kunststoff oder Wachs aufgebracht.

Durch erneutes Bestrahlen mit Licht einer geeigneten Lichtquelle erhärten die dem Sauerstoffzutritt entzogenen Partien an den Berührungsflächen der Retentionskörper, so daß diese zuverlässig festgehalten werden.

Anschließend wird das Gußmodell wie üblich in eine feuerfeste Masse eingebettet, das Gußmodell durch Erhitzen entfernt und der Metallguß durchgeführt.

Beim erfindungsgemäßen Verfahren ist nach der ersten Bestrahlung die inhibierte Schicht des Haftlacks nahezu unbegrenzt stabil und der Zahntechniker kann gezielt, z. B. mit einer Pinzette einzelne Retentionsperlen an besonders kritischen Stellen ausgewogen verteilen. Erst die nachfolgende zweite Bestrahlung heftet die Retentionsperlen fest, so daß während der Arbeit Korrekturen noch leicht möglich sind. Eine angefangene Arbeit kann überdies ohne Probleme unterbrochen und nach einiger Zeit weiter fortgesetzt werden.

Als photopolymerisierbare Verbindung, deren Polymerisation an der Oberfläche durch Luftsauerstoff inhibiert wird, sind radikalisch polymerisierende, ethylenisch ungesättigte Verbindungen geeignet, z.B. ungesättigte Polyesterharze im Gemisch mit Styrol oder Vinyltoluol, Vinylether, Allylester und insbesondere Derivate der Acrylsäure und Methacrylsäure.

Unter den Derivaten der Acryl- und Methacrylsäure haben sich besonders die Ester mit mono-, di- oder polyfunktionellen Alkoholen bewährt. Auch die sogenannten Urethanacrylate und -methacrylate sind geeignet.

Besonders bevorzugt ist der Einsatz von difunktionellen Acrylaten oder Methacrylaten.

Als Photopolymerisationsinitiatoren können die üblichen Photopolymerisationsinitiatoren eingesetzt werden, wie aromatische Monoketone, Thioxanthone, aromatische und aliphatische 1,2-Diketone, Benzoinether, Benzilketale sowie Phosphinoxyde und Phosphinsulfide.

Besonders geeignet sind diejenigen Photopolymerisationsinitiatoren, die auf sichtbares Licht einer Wellenlänge zwischen 400 und 550 nm ansprechen. In diesem Bereich geeignete Photopolymerisationsinitiatoren sind z. B. Thioxanthone, 1,2-Diketone sowie Phosphinoxyde und Phosphinsulfide. Von den 1,2-Diketonen eignen sich besonders Campherchinon, Benzil und Phenanthrenchinon.

Die Photopolymerisationsinitiatoren werden in den üblichen Konzentrationen eingesetzt, das sind 0,01 bis 10 Gew.-%, bezogen auf die polymerisierbaren Verbindungen.

In vorteilhafter Weise werden die Photopolymerisationsinitiatoren zusammen mit bekannten Photopolymerisationsaktivatoren eingesetzt. Geeignete Photopolymerisationsaktivatoren sind organische Amine, insbesondere tertiäre Amine, cyclische 1,3-Diketone, wie Barbitursäuren, und 2-substituierte 1,3-Cyclopentandione und 1,3-Cyclohexandione sowie organische Phosphite.

Auch die Photopolymerisationsaktivatoren werden in den üblichen Konzentrationen eingesetzt, das sind 0,01 bis 10 Gew.-%, bezogen auf die polymerisierbaren Verbindungen.

Die für das erfindungsgemäße Verfahren verwendeten Haftlacke können organische Füllstoffe oder lösliche organische Polymere zur Einstellung des Fließverhaltens und der Viskosität enthalten.

Es können den Haftlacken Substanzen zugesetzt werden, die eine bessere Benetzung des Gußmodells ermöglichen, außerdem Pigmente oder Farbstoffe, die so ausgewählt werden müssen, daß sie keine starke Eigenabsorption in dem Bereich aufweisen, in dem die verwendeten Photopolymerisationsinitiatoren ihre aktive Lichtabsorption haben.

Darüber hinaus können die Haftlacke übliche Stabilisatoren gegen vorzeitige thermische Polymerisation enthalten.

Die Bestandteile der photopolymerisierbaren Haftlacke müssen so ausgewählt werden, daß das Polymerisat vor dem Gußvorgang rückstandsfrei aus der Einbettmasse, z. B. durch Verbrennen oder Ausschmelzen, entfernt werden kann.

Die Schichtstärke der durch den Luftsauerstoff inhibierten oberen Schicht des Photopolymerisats kann durch den Fachmann in wenigen einfachen Versuchen ermittelt werden, wobei folgende Größen eine Rolle spielen:
 – Reaktivität und Sauerstoffempfindlichkeit der Monomeren
 – Aktivität des Photopolymerisationsinitiators und gegebenenfalls Photopolymerisationsaktivators
 – Konzentration des Photopolymerisationsinitiators oder gegebenenfalls Photopolymerisationsaktivators
 – Intensität der Lichtquelle.

Beispiel

Es wird folgende photopolymerisierbare Zubereitung hergestellt:

In einem Gemisch aus
 41 g Bishydroxymethyl-bicyclo [5.2.1.02,6]-decandiacrylat
 30 g Bis-GMA (Reaktionsprodukt aus Glycidylmethacrylat und Bisphenol A)
 12 g Ehtylenglykoldimethacrylat und
 8 g Methylmethacrylat
werden
 0,9 g Campherchinon
 1,0 g Methyl-diethanolamin-dimethacrylat und
 0,01 g blauer fettlöslicher Farbstoff
gelöst.

Diese Lösung wird mit einem Pinsel dünn auf ein Gußmodell aus Wachs aufgetragen und mit einem handelsüblichen Tageslicht-Polymerisationsgerät (Visio-Alfa, Firma Espe) ca. 10 Sekunden lang flächig bestrahlt.

Auf die klebrige Oberflächenschicht werden handelsübliche Retentionsperlen aus Kunststoff (Durchmesser 0,4 mm) gleichmäßig aufgestreut. Einige Retentionsperlen werden mit einem spitz zulaufenden Marderhaarpinsel aufgenommen und im Randbereich gezielt gesetzt.

Anschließend wird erneut ca. 10 Sekunden mit dem oben genannten Bestrahlungsgerät belichtet.

Die Retentionsperlen haften nunmehr gut an der Oberfläche des Gußmodells. Sie sind lediglich an ihrem Kontaktpunkt befestigt und weisen daher grössere, sich zur Modelloberfäche verjüngende Flächen auf.

Anschließend wird das Gußmodell in eine feuerfeste Form eingebettet, das Wachsmodell mit den Retentionsperlen durch Erhitzen entfernt und der Metallguß durchgeführt.

Man erhält eine Metallkonstruktion, die gut ausgebildete Retentionsperlen an der Oberfläche aufweist, die nur am Kontaktpunkt befestigt sind und brauchbare, sich zur Metalloberfäche verjüngende Flächen aufweisen.

## Patentansprüche

1. Verfahren zum Aufbringen von rückstandsfrei entfernbaren Retentionskörpern auf Gußmodelle von dentalen, prothetischen Metallkonstruktionen, wobei das Gußmodell mit einem rückstandsfrei entfernbaren, fließfähigen Haftlack für die Retentionskörper überzogen wird, dadurch gekennzeichnet, daß man

1.1 einen Haftlack verwendet, der

(a) mindestens eine photopolymersierbare Verbindung, deren Polymerisation durch Sauerstoff inhibiert wird,

(b) mindestens einen Photopolymerisationsinitiator,

(c) gegebenenfalls mindestens einen Photopolymerisationsaktivator und

(d) gegebenenfalls Füll-, Farb- und Hilfsstoffe enthält,

1.2 das überzogene Gußmodell mit einer geeigneten Lichtquelle bestrahlt,

1.3 die rückstandsfrei entfernbaren Retentionskörper auf die bestrahlte Gußmodelloberfläche aufbringt und

1.4 das Gußmodell erneut bestrahlt.

2. Verfahren nach Anspruch 1, dadurch gekennzeichnet, daß man als photopolymerisierbare Verbindung radikalisch photopolymerisierende, ethylenisch ungesättigte Verbindungen einsetzt.

3. Verfahren nach Anspruch 2, dadurch gekennzeichnet, daß man als photopolymerisierbare Verbindung ungesättigte Polyester im Gemisch mit Styrol oder Vinyltoluol, Vinylether oder Allylester einsetzt.

4. Verfahren nach Anspruch 2, dadurch gekennzeichnet, daß man als photopolymerisierbare Verbindung Acryl- oder Methacrylsäureverbindungen, insbesondere deren Ester einsetzt.

## Claims

1. A method for applying residue-free removable retention means onto casting patterns of dental prosthetic metal constructions in which the casting pattern is coated with a residue-free removable fluid adhesive composition for the retention means, characterized by

1.1 using an adhesive composition containing

(a) at least one photopolymerizable compound the polymerization of which is inhibited by oxygen,

(b) at least one photopolymerization initiator,

(c) optionally at least one photopolymerization activator, and

(d) optionally fillers, coloring and adjuvant substances,

1.2 irradiating said coated casting pattern by means of a suitable light source,

1.3 applying the residue-free removable retention means onto the irradiated surface of the casting pattern, and

1.4 irradiating the casting pattern once more.

2. Method according to claim 1, characterized by using as photopolymerizable compound ethylenically unsaturated compounds undergoing free radical photopolymerization.

3. Method according to claim 2, characterized by using as photopolymerizable compound unsaturated polyesters in mixture with styrene or vinyl toluene, vinyl ether, or allyl ester.

4. Method according to claim 2, characterized by using as photopolymerizable compound acrylic acid or methacrylic acid compounds, especially the esters thereof.

## Revendications

1. Procédé d'application de corps de rétention, pouvant être éliminés sans résidu, sur des modèles de coulée de structures métalliques de prothèse dentaire, le modèle de coulée étant revêtu d'un vernis adhéstif fluide pour les corps de rétention, caractérisé en ce que

1.1 on utilise un vernis adhéstif, contenant

(a) au moins un composé photopolymérisable, dont la polymérisation est inhibée par l'oxygène,

(b) au moins un amorceur de photopolymérisation,

(c) éventuellement, au moins un activateur de photopolymérisation, et

(d) éventuellement, des charges, colorants et adjuvants,

1.2 on expose le modèle de coulée ainsi revêtu à une source lumineuse appropriée,

1.3 on applique sur la surface du modèle de coulée exposée à la lumière les corps de rétention pouvant être éliminés sans résidu, et

1.4 on expose de nouveau le modèle de coulée à la lumière.

2. Procédé selon la revendication 1, caractérisé en ce qu'on utilise comme composé photopolymérisable des composés à insaturation éthylénique et pouvant subir une photopolymérisation radicalaire.

3. Procédé selon la revendication 2, caractérisé en ce qu'on utilise comme composé photopolymérisable des polyesters insaturés en mélange avec du styrène ou du vinyltoluène, du vinyléther ou un ester allylique.

4. Procédé selon la revendication 2, caractérisé en ce qu'on utilise comme composé photopolymérisable des composés de l'acide acrylique ou méthacrylique, en particulier leurs esters.